# EUROPEAN PATENT APPLICATION

(11) **EP 3 276 970 A1**
(43) Date of publication of application: **31.01.2018**
(21) Application number: 16771619.0
(22) Date of filing: 03.03.2016
(51) Int. Cl.: H04N 21/414, H04B 1/16, H04N 21/434, H04N 21/438

(54) **DIGITAL BROADCAST RECEPTION DEVICE**

(30) Priority: 27.03.2015 JP 2015067471; 28.12.2015 JP 2015256635
(71) Applicant: Panasonic Intellectual Property Management Co., Ltd., Osaka-shi, Osaka 540-6207 (JP)
(72) Inventor: OKADA, Toshihiro, Osaka-shi, Osaka540-6207 (JP); NISHIO, Toshiroh, Osaka-shi, Osaka 540-6207 (JP); KAWABATA, Yohei, Osaka-shi, Osaka 540-6207 (JP)
(74) Representative: Vigand, Philippe
(86) International application number: PCT/JP2016/001157
(87) International publication number: WO 2016/157725

(57) **Abstract**

Provided is a digital broadcast reception device that enables a user to continuously view a service of a digital broadcast while the user is moving. In the digital broadcast reception device, a first received signal processor receives a first channel and outputs a first channel signal. The second received signal processor receives a second channel and generates a second channel signal. In a period while the first received signal processor is outputting the first channel signal, the controller selects the second channel based on pieces of information regarding services provided by respective channels, the pieces of information being individually included in the first channel signal and the second channel signal. The controller switches a signal to be outputted from either one signal of the first channel signal and the second channel signal to other one of the first channel signal and the second channel signal based on individual receiving states of the first channel and the second channel.

## Description

### TECHNICAL FIELD

The present disclosure relates to a digital broadcast reception device that receives a digital broadcast such as a terrestrial digital television broadcast and the like.

### BACKGROUND ART

There is known a technology for receiving a digital broadcast in a mobile body such as an automobile (for example, PTL 1).

PTL 1 discloses a digital broadcast receiver capable of switching and using plural types of received services. In the digital broadcast carried out in Japan, hierarchical transmission of simultaneously transmitting a plurality of hierarchies different in transmission characteristics is possible.

Then, the digital broadcast receiver disclosed in PTL 1 can receive different types of encoded digital data (MPEG2, MPEG4/H.264 and the like) from a broadcast wave of a same channel by the digital broadcast, and can switch digital data, which is viewed by a user, in the received digital data. Moreover, in the digital broadcast receiver disclosed in PTL 1, the plural types of received services can be switched based on network follow information.

### Citation List

### Patent Literature

PTL 1: Unexamined Japanese Patent Publication No. 2006-270208

### SUMMARY OF THE INVENTION

In the digital broadcast receiver of PTL 1, in a case where the network follow information is not present, it is difficult for the user to continuously view a service while the user is moving.

Moreover, for example, in a digital broadcast carried out in Europe and the like, unlike the hierarchical transmission in Japan, the different types of encoded digital data are not sometimes present in the broadcast wave of the same channel. In this case, the digital broadcast receiver cannot decode digital broadcast data encoded for each of the plurality of hierarchies different in transmission characteristics.

The present disclosure provides a digital broadcast reception device that enables the user to continuously view the service in response to a receiving state of the digital broadcast while the user is moving.

The digital broadcast reception device in the present disclosure includes: a first received signal processor; a second received signal processor; and a controller. The first received signal processor receives a signal, which indicates a first channel in a digital broadcast, and outputs a first channel signal obtained by demodulating the received signal. The second received signal processor receives a signal, which indicates a second channel different from the first channel, and generates a second channel signal obtained by demodulating the received signal. The controller controls operations of the first received signal processor and the second received signal processor. In a period while the first received signal processor is outputting the first channel signal, the controller selects the second channel based on pieces of information regarding services provided by respective channels, the pieces of information being individually included in the first channel signal and the second channel signal. The controller switches a signal to be outputted from either one signal of the first channel signal and the second channel signal to other one of the first channel signal and the second channel signal based on individual receiving states of the first channel under output and the selected second channel.

The digital broadcast reception device in the present disclosure enables the user to continuously view the service while the user is moving.

### BRIEF DESCRIPTION OF DRAWINGS

FIG. 1 is a block diagram schematically showing a configuration example of a digital broadcast reception device in a first exemplary embodiment.
FIG. 2 is a view schematically showing a receiving state of a digital broadcast in the digital broadcast reception device mounted on a mobile body.
FIG. 3 is a flowchart showing an example of operations of the digital broadcast reception device in the first exemplary embodiment.
FIG. 4 is a flowchart showing an example of a main reception system demodulation processing executed in the digital broadcast reception device in the first exemplary embodiment.
FIG. 5 is a flowchart showing an example of a sub reception system demodulation processing executed in the digital broadcast reception device in the first exemplary embodiment.
FIG. 6A is a diagram showing an example of a display video by a video signal output from the digital broadcast reception device in the first exemplary embodiment.
FIG. 6B is a diagram showing an example of the display video by the video signal output from the digital broadcast reception device in the first exemplary embodiment.
FIG. 6C is a diagram showing an example of the display video by the video signal output from the digital broadcast reception device in the first exemplary embodiment.
FIG. 6D is a diagram showing an example of the display video by the video signal output from the digital broadcast reception device in the first exemplary embodiment.
FIG. 7 is a block diagram schematically showing a configuration example of a digital broadcast reception device in a second exemplary embodiment.
FIG. 8 is a flowchart showing an example of a sub reception system demodulation processing executed in the digital broadcast reception device in the second exemplary embodiment.

### DESCRIPTION OF EMBODIMENTS

Hereinafter, exemplary embodiments will be described in detail while appropriately referring to the drawings. However, a description more in detail than necessary is omitted in some cases. For example, a detailed description of a well-known item and a duplicate description of substantially the same configuration are omitted in some cases. These omissions are made in order to avoid unnecessary redundancy of the following description and to facilitate the understanding of those skilled in the art.

Note that the accompanying drawings and the following description are provided in order to cause those skilled in the art to fully understand the present disclosure, and it is not intended to thereby limit the subject of the description of the scope of claims.

Moreover, the respective drawings are schematic views, and are not illustrated necessarily exactly. Furthermore, in the respective drawings, in some cases, the same reference numerals are assigned to the same constituents, and a description thereof may be omitted or simplified.

### FIRST EXEMPLARY EMBODIMENT

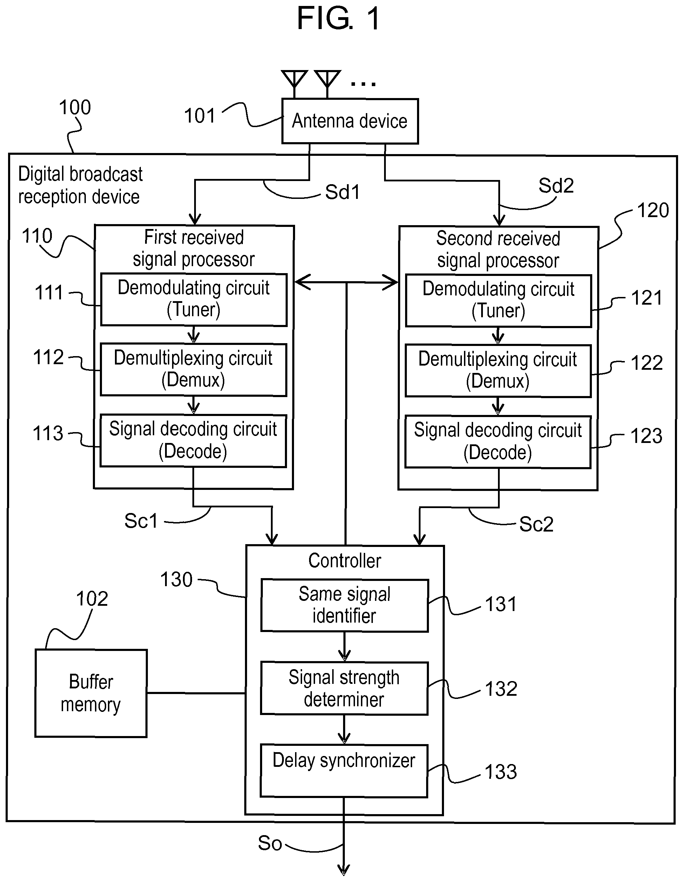

Hereinafter, a first exemplary embodiment will be described with reference to FIG. 1 to FIG. 6D.

### [1-1. Configuration]

### [1-1-1. Outline]

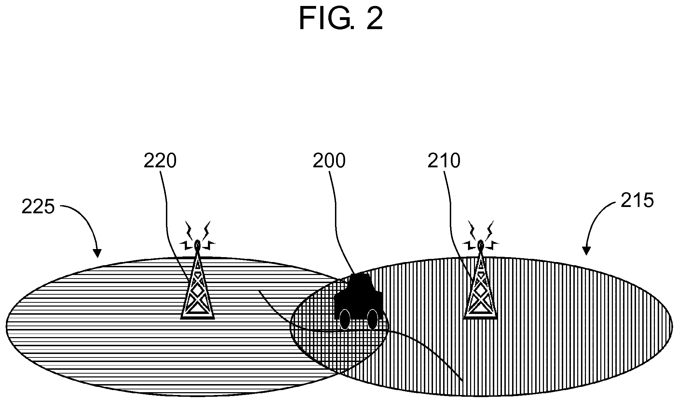

A description will be made of an outline of digital broadcast reception device 100 in a first exemplary embodiment with reference to FIG. 1 and FIG. 2.

Note that, in the present disclosure, a service received in digital broadcast reception device 100 means a content such as a program provided from a broadcast station through a broadcast wave.

FIG. 1 is a block diagram schematically showing a configuration example of digital broadcast reception device 100 in the first exemplary embodiment.

As shown in FIG. 1, a digital broadcast reception system includes: digital broadcast reception device 100; and antenna device 101. Digital broadcast reception device 100 includes: first received signal processor 110; second received signal processor 120; controller 130; and buffer memory 102.

The digital broadcast reception system in this exemplary embodiment is, for example, a reception system capable of receiving a digital broadcast such as a terrestrial digital television broadcast. In the terrestrial digital television broadcast, logical channels, each of which is composed of a video signal, an audio signal and a data signal, are encoded and multiplexed based on a standard such as MPEG (Moving Picture Experts Group), and are subjected to digital modulation by the OFDM (Orthogonal Frequency Division Multiplexing) system, whereby a digital broadcast wave of one broadcast channel is generated. A plurality of the broadcast channels are broadcast from a plurality of the broadcast stations, and a broadcast network is composed of the plurality of broadcast stations.

Moreover, this digital broadcast reception system is mountable on a mobile body, for example, such as a vehicle.

FIG. 2 is a view schematically showing a receiving state of the digital broadcast in digital broadcast reception device 100 mounted on mobile body 200.

In FIG. 2, mobile body 200 on which the digital broadcast reception system is mounted is passing through a boundary region between service area 215 and service area 225. Service area 215 is an area (range) where a digital broadcast wave by first transmitting station 210 is receivable. Service area 225 is an area (range) where a digital broadcast wave by second transmitting station 220 is receivable. By using first received signal processor 110 and second received signal processor 120, digital broadcast reception device 100 in this exemplary embodiment selects a digital broadcast wave, in which a receiving state is good, from among the digital broadcast waves individually sent out from transmitting station 210 and transmitting station 220. In this way, a user who uses digital broadcast reception device 100 can continuously view a desired service during a period of moving by mobile body 200 on which digital broadcast reception device 100 is mounted.

### [1-1-2. Configuration of digital broadcast reception device]

Hereinafter, a description will be made of a configuration of digital broadcast reception device 100 in this exemplary embodiment with reference to FIG. 1.

Digital broadcast reception system in this exemplary embodiment receives the digital broadcast wave, which is broadcast from the broadcast station, by antenna device 101, and demodulates a received digital broadcast signal by digital broadcast reception device 100. Then, digital broadcast reception device 100 outputs a channel signal, which is obtained as a result of the demodulation, to a display device (not shown) or the like viewable by the user. The display device may be provided in digital broadcast reception device 100, or may be provided separately from digital broadcast reception device 100.

For example, antenna device 101 includes a plurality of antennas capable of composing a diversity antenna. Antenna device 101 receives digital broadcast waves of channels (physical channels), which are formed of different frequency bands, by the plurality of antennas, outputs digital broadcast signal Sd1 to first received signal processor 110, and outputs digital broadcast signal Sd2 to second received signal processor 120.

In digital broadcast reception device 100, each of first received signal processor 110 and second received signal processor 120 is composed of a tuner module that performs signal processing for selecting one channel from the digital broadcast and generating a channel signal.

First received signal processor 110 includes: demodulating circuit 111; demultiplexing circuit 112; and signal decoding circuit 113.

Demodulating circuit 111 demodulates digital broadcast signal Sd1 regarding the selected channel, and outputs digital broadcast signal Sd1, which is thus demodulated, to demultiplexing circuit 112. The digital broadcast signal output from demodulating circuit 111 is in a state of being multiplexed and encoded.

Demultiplexing circuit 112 performs demultiplexing for the digital broadcast signal, which comes from demodulating circuit 111, and outputs a digital broadcast signal, which is obtained as a result of the demultiplexing, to signal decoding circuit 113.

Signal decoding circuit 113 decodes the digital broadcast signal, which comes from demultiplexing circuit 112, and outputs, to controller 130, channel signal Sc1 including a video signal, an audio signal and a data signal, which are obtained as a result of decoding the digital broadcast signal.

In a similar way to first received signal processor 110, second received signal processor 120 includes: demodulating circuit 121; demultiplexing circuit 122; and signal decoding circuit 123. Configurations and operations of the respective circuits in second received signal processor 120 are substantially the same as those of the respective circuits in the first received signal processor 110, and accordingly, a description thereof is omitted.

Buffer memory 102 is composed of a storage device, for example, such as a flash memory. Buffer memory 102 temporarily stores (holds) the audio signal, the video signal and the like, which are included in each of channel signal Sc1 and channel signal Sc2. Either one of channel signal Sc1 and channel signal Sc2, which are held in buffer memory 102, is output as output signal So to an outside.

Controller 130 is composed, for example, of a CPU (Central Processing Unit), an MPU (Micro Processing Unit) or the like, and controls a whole operation of digital broadcast reception device 100. Controller 130 includes an internal memory, and realizes predetermined functions in cooperation with software. For example, controller 130 realizes functions as same signal identifier 131, signal strength determiner 132, and delay synchronizer 133.

Same signal identifier 131 reads out varieties of information, which are included individually in channel signal Sc1 and channel signal Sc2, from buffer memory 102 or the internal memory (not shown), and determines a uniformity between the services by the respective channels of channel signal Sc1 and channel signal Sc2. Note that the uniformity determination refers to determining whether or not the services by the respective channels are mutually the same services.

As an example of the varieties of information usable by same signal identifier 131, there is a broadcast ID (Identification) that is identification information imparted to the digital broadcast. For example, the broadcast ID includes a Network ID (hereinafter, referred to as "NID"), an Original Network ID (hereinafter, referred to as "ONID"), a Transport Stream ID (hereinafter, referred to as "TSID"), and a Service ID (hereinafter, referred to as "SID"). The NID is an ID that identifies the broadcast network, and is defined in the NIT (Network Information Table). The ONID is an ID that identifies, for example, a whole of the broadcast network for each country. The TSID is an ID of each multiplex. The SID is an ID that identifies the service in the digital broadcast.

In addition to the broadcast ID, or in place of the broadcast ID, same signal identifier 131 may determine the uniformity between channel signal Sc1 and channel signal Sc2 based on a service name and an event name. In the standard such as ISDB (Integrated Services Digital Broadcasting) and DVB (Digital Video Broadcasting), the service name and the event name are defined in the SDT (Service Description Table), and are embedded as text data in each of channel signal Sc1 and channel signal Sc2. Moreover, same signal identifier 131 may determine the uniformity between channel signal Sc1 and channel signal Sc2 by using the audio signal and the video signal, which are included in each of channel signal Sc1 and channel signal Sc2. A determination method of the uniformity, which is based on information described in the SDT and information (content information) regarding contents of the service, such as the audio data and the image data, will be described later.

Signal strength determiner 132 measures individual signal strengths of two channel signals Sc1 and Sc2 between which the uniformity is determined by same signal identifier 131, and determines which of two channel signals Sc1 and Sc2 is a signal having a higher signal strength. As such a signal strength to be measured, for example, there are a field intensity of the signal, a value of a bit error rate (BER), and the like.

For example, delay synchronizer 133 adjusts a period of holding each of channel signal Sc1 and channel signal Sc2 in buffer memory 102 (hereinafter, this period is referred to as "buffer period"), and thereby synchronizes delays of channel signal Sc1 and channel signal Sc2 with each other. In this way, in a case of switching output signal So between channel signal Sc1 and channel signal Sc2, output signal So can be switched (for example, output signal So is switched from channel signal Sc1 to channel signal Sc2) in a state where channel signal Sc1 and channel signal Sc2 synchronize with each other.

Note that the description is made above of such an example where controller 130 is composed of a CPU; however, controller 130 is not limited to the CPU, and may be a dedicated electronic circuit designed to realize a predetermined function or a hardware circuit such as a reconfigurable electronic circuit. Controller 130 may be composed of a variety of semiconductor integrated circuits such as an MPU, a microcomputer, a DSP (Digital Signal Processor), an FPGA (Field Programmable Gate Array), and an ASIC (Application Specific Integrated Circuit). For example, same signal identifier 131, signal strength determiner 132 and delay synchronizer 133 may be composed of separate circuit devices.

### [1-2. Operations]

### [1-2-1. Outline of operations]

Next, a description will be made of an outline of operations of digital broadcast reception device 100 in this exemplary embodiment.

Digital broadcast reception device 100 is mounted on the mobile body, for example, such as an automobile, and receives a digital broadcast broadcast by a broadcast station. The mobile body sometimes moves across a plurality of service areas provided by a plurality of broadcast stations. In this case, in order to enable the user to continuously view a service which the user desires, two reception systems composed of first received signal processor 110 and second received signal processor 120 are used in digital broadcast reception device 100. For example, in digital broadcast reception device 100, while one of the reception systems (hereinafter, this is referred to as "main reception system") is stably receiving a digital broadcast signal that indicates a specific channel as a viewing target, a candidate for a next station to be selected is selected in other of the reception systems (hereinafter, this is referred to as "sub reception system"). In this way, when the mobile body goes out of the service area of the broadcast station from which the mobile body is receiving a broadcast service at present, and enters the service area of the adjacent broadcast station, then digital broadcast reception device 100 can automatically switch the channel.

Here, in the sub reception system, from among plural types of the received services in the digital broadcast receivable by digital broadcast reception device 100, an equivalent service (that is, a same program) to the broadcast service, which is being received (viewed) at present in the main reception system, is determined by same signal identifier 131. In this way, the above-mentioned uniformity is determined.

Such determination processing by same signal identifier 131 may be performed based on network information included in the NIT configured for each of broadcasters in the area. For example, the specific IDs (TSID, SID, NID and the like) indicate an affiliated broadcasting station. Therefore, in a country where these pieces of the network information are arranged (for example, Japan), the network information is extracted from the digital broadcast waves, whereby the digital broadcast signals from the broadcast stations of the same group can be determined. However, for example in newly emerging countries and the like, it is frequent that the network information such as in the NIT is not arranged, and reliability of the network information concerned is low in some cases.

In this connection, in digital broadcast reception device 100 of this exemplary embodiment, the uniformity of the service is determined between the main reception system and the sub reception system based on the SDT (Service Description Table) in which a service name and the like are described and based on the content information including the audio data and the image data, the SDT and the content information being included in the digital broadcast signal. In this way, even in a case where the network information is not usable, or even in a case where the reliability of the network information is low, digital broadcast reception device 100 can make it possible to find the service, which is equivalent to the service now being viewed by the user, from the whole of the receivable services, thus making it possible for the user to continuously view the same service in a case where the user moves across a variety of broadcast areas.

Moreover, in digital broadcast reception device 100 of this exemplary embodiment, in a case of switching the service between the main reception system and the sub reception system, timing of switching output signal So (for example, timing of switching output signal So from channel signal Sc1 to channel signal Sc2) is adjusted based on each of the content information. In this way, at a time when output signal So is switched, the user can continuously view a desired service without feeling that something is wrong.

Hereinafter, a description will be made of the operations of digital broadcast reception device 100 in this exemplary embodiment.

### [1-2-2. Operations of digital broadcast reception device]

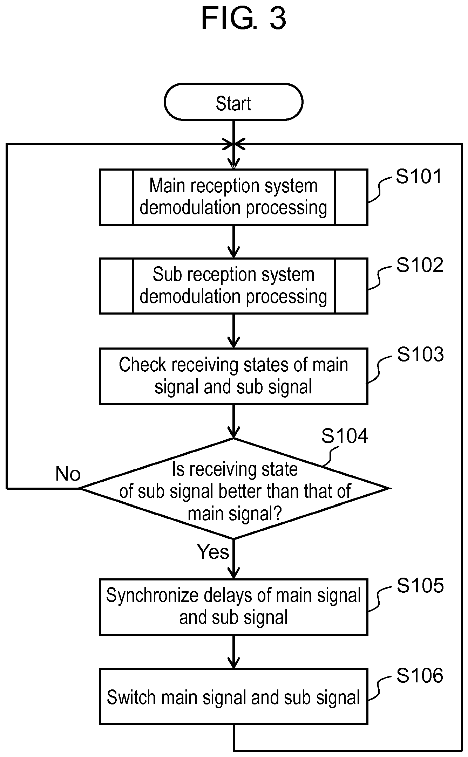

A description will be made of the operations of digital broadcast reception device 100 in this exemplary embodiment with reference to FIG. 3.

FIG. 3 is a flowchart showing an example of the operations of digital broadcast reception device 100 in the first exemplary embodiment.

The flowchart of FIG. 3 is executed by controller 130 of digital broadcast reception device 100. The flowchart of FIG. 3 is started in a state where the specific channel (specific service) in the digital broadcast is selected by an operation of the user, and the like in digital broadcast reception device 100.

First, controller 130 performs main reception system demodulation processing (Step S101).

The main reception system demodulation processing is processing, in the main reception system, for performing signal processing such as demodulation of a signal that indicates the channel selected by the user, and for outputting a main signal that represents the service to be viewed by the user. Details of the main reception system demodulation processing will be described later.

Hereinafter, a description will be made of an example where the main reception system is sequentially switched between first received signal processor 110 and second received signal processor 120. Note that the main reception system in an initial state is assumed to be set to first received signal processor 110. In this case, channel signal Sc1 is output as the main signal.

Next, controller 130 performs sub reception system demodulation processing (Step S102).

The sub reception system demodulation processing is processing, in the sub reception system, for selecting a channel different from the channel selected in the main reception system, and for selectively demodulating a sub signal that represents the same service as that of the main signal. In this operation example, the sub reception system in the initial state is set to second received signal processor 120, and channel signal Sc2 becomes the sub signal.

Note that the main reception system may be set to second received signal processor 120, and the sub reception system may be set to first received signal processor 110. In that case, channel signal Sc2 is output as the main signal, and channel signal Sc1 is output as the sub signal.

In the sub reception system demodulation processing, controller 130 functions as same signal identifier 131, and compares respective pieces of the content information, which are included in the main signal and the sub signal, with each other, and thereby determines whether or not the contents of the services of the main signal and the sub signal are the same. Details of the sub reception system demodulation processing will be described later.

Note that the main reception system demodulation processing (Step S101) and the sub reception system demodulation processing (Step S102) may be executed concurrently (in parallel).

Next, controller 130 functions as signal strength determiner 132, and checks receiving states of both of the signals, which are main signal Sc1 and sub signal Sc2 (Step S103). Note that this main signal Sc1 refers to channel signal Sc1, and this sub signal Sc2 refers to channel signal Sc2.

Specifically, controller 130 measures individual signal strengths of channel signal Sc1 demodulated in first received signal processor 110 and channel signal Sc2 demodulated in second received signal processor 120.

Next, controller 130 functions as signal strength determiner 132, and compares the receiving states of main signal Sc1 and sub signal Sc2, which are checked in Step S103. Then, controller 130 determines whether or not the received state of sub signal Sc2 is better than the receiving state of main signal Sc1 (Step S104).

Specifically, the determination of controller 130 (signal strength determiner 132) in Step S104 is performed based on whether or not the signal strength of sub signal Sc2 is higher than the signal strength of main signal Sc1.

In a case of having determined in Step S104 that the received state of sub signal Sc2 is not better than the receiving state of main signal Sc1 (No in Step S104), controller 130 returns to Step S101, and repeats the processing of Step S101 and after.

Meanwhile, in a case of having determined in Step S104 that the receiving state of sub signal Sc2 is better than the receiving state of main signal Sc1 (Yes in Step S104), controller 130 functions as delay synchronizer 133, and performs processing of Steps S105 and S106.

That is, in a case of having determined that the receiving state of second received signal processor 120 is better than the receiving state of first received signal processor 110 (Yes in Step S104), controller 130 switches the main reception system and the sub reception system so that an output of second received signal processor 120 can become "main signal" in Steps S105, S106. At this time, if timing (output timing of main signal Sc1) when main signal Sc1 is output from first received signal processor 110 and timing (output timing of sub signal Sc2) when sub signal Sc2 is output from second received signal processor 120 as a switching destination are not synchronized in advance with each other, then it is possible that both of the output timing may be shifted from each other.

Accordingly, controller 130 functions as delay synchronizer 133, and synchronizes both of the output timing with each other, which are: the timing of outputting main signal Sc1 from first received signal processor 110; and the timing of outputting sub signal Sc2 from second received signal processor 120 (Step S105).

Specifically, first, controller 130 compares audio data of main signal Sc1 and audio data of sub signal Sc2 with each other, and senses which output timing of main signal Sc1 and sub signal Sc2 is earlier. In a case where the output timing of sub signal Sc2 is earlier than the output timing of main signal Sc1, controller 130 extends a buffer period of holding sub signal Sc2 in buffer memory 102 so as to delay the output timing of sub signal Sc2 in matching with the output timing of main signal Sc1. Meanwhile, in a case where the output timing of main signal Sc1 is earlier than the output timing of sub signal Sc2, controller 130 reduces the buffer period for sub signal Sc2 so as to advance the output timing of sub signal Sc2 in matching with the output timing of main signal Sc1.

In a case where a delay time between main signal Sc1 and sub signal Sc2 is larger than a maximum value of the buffer period, and the like, it is possible that the pieces of the output timing of both of the signals cannot be synchronized with each other. Accordingly, based on the content information included in main signal Sc1, controller 130 senses timing of changing a scene, and so on in a program under broadcast in main signal Sc1, and switches output signal So from main signal Sc1 to sub signal Sc2 at the timing sensed (Step S106).

For example, controller 130 may determine such switching timing from main signal Sc1 to sub signal Sc2 based on a change of the audio data of main signal Sc1. Alternatively, for example, controller 130 may compare IDR (Instantaneous Decoding Refresh) pictures (frames) with each other, may thereby sense a large change of the image data across the whole of the screen, and may determine the timing concerned. Alternatively, controller 130 may perform the switching from main signal Sc1 to sub signal Sc2 in a period of a commercial message or at start timing of the commercial message based on a predetermined flag that indicates a broadcast period of the commercial message.

As described above, digital broadcast reception device 100 switches output signal So from main signal Sc1 to sub signal Sc2 in matching with the timing of the scene change in the service being viewed by the user at present, and can thereby switch the channel while reducing such a feeling of discomfort, which is given to the user.

After Step S106, controller 130 sets second received signal processor 120 as the main reception system, and in addition, sets first received signal processor 110 as the sub reception system, and performs the processing of Step S101 and after one more time.

By the processing described above, in digital broadcast reception device 100, the main reception system and the sub reception system are alternately switched in response to a change of the receiving state, and accordingly, it becomes possible for the user who gets in the mobile body to continuously view the same service while the user is moving.

Moreover, in digital broadcast reception device 100, data substantially equivalent to a few seconds is held in buffer memory 102, whereby it becomes possible to restore a signal from the data in buffer memory 102 in a case of performing the switching from main signal Sc1 to sub signal Sc2. In this way, it becomes possible to reduce the feeling of wrongness, which is given to the user in the case of switching output signal So from main signal Sc1 to sub signal Sc2 by delay synchronizer 133.

Note that, in digital broadcast reception device 100, at a time of switching output signal So from main signal Sc1 to sub signal Sc2, the delays of main signal Sc1 and the delay of sub signal Sc2 do not have to be synchronized with each other. For example, output signal So is switched from main signal Sc1 to sub signal Sc2 in matching with the period of the commercial message, and the like, whereby such a feeling of discomfort, which may be possibly sensed by the user due to a time shift between main signal Sc1 and sub signal Sc2, can be reduced. Moreover, in a case where the signal strength of main signal Sc1 falls down below a predetermined threshold value, controller 130 may instantaneously switch output signal So from main signal Sc1 to sub signal Sc2 without synchronizing the delays of main signal Sc1 and sub signal Sc2 with each other.

### [1-2-2-1. Main reception system demodulation processing]

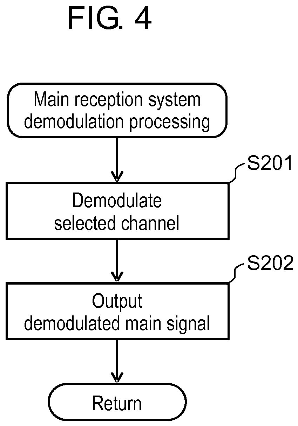

Next, a description will be made of the main reception system demodulation processing of step S101 of FIG. 3 with reference to FIG. 4.

FIG. 4 is a flowchart showing an example of the main reception system demodulation processing executed in digital broadcast reception device 100 in the first exemplary embodiment.

The flowchart of FIG. 4 is executed by controller 130, and is repeatedly performed in a predetermined cycle (for example, 30 fps (frames per second)). Hereinafter, a description will be made of a case where the main reception system is first received signal processor 110. Note that second received signal processor 120 may be the main reception system. In that case, following first received signal processor 110 just needs to be interpreted as second received signal processor 120, and digital broadcast signal Sd1 just needs to be interpreted as digital broadcast signal Sd2.

First, controller 130 controls first received signal processor 110 to demodulate a channel, which is selected in advance by the user, from digital broadcast signal Sd1 received by antenna device 101 (Step S201).

At this time, for digital broadcast signal Sd1 of the selected service, first received signal processor 110 sequentially implements the demodulation, the demultiplexing and the decoding in demodulating circuit 111, demultiplexing circuit 112 and signal decoding circuit 113 (refer to FIG. 1), and outputs the signal, which is subjected to these pieces of the processing, as main signal Sc1 to controller 130.

Next, controller 130 outputs main signal Sc1, which is demodulated by first received signal processor 110, as output signal So to the outside while holding main signal Sc1 in buffer memory 102 at any time (Step S202).

In this way, controller 130 ends the processing of Step S101 of FIG. 3, and proceeds to the processing of Step S102.

### [1-2-2-2. Sub reception system demodulation processing]

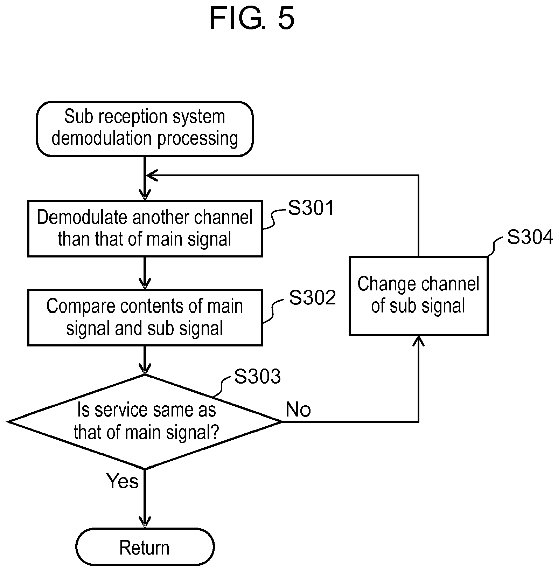

Next, a description will be made of the sub reception system demodulation processing of step S102 of FIG. 3 with reference to FIG. 5.

FIG. 5 is a flowchart showing an example of the sub reception system demodulation processing executed in digital broadcast reception device 100 in the first exemplary embodiment.

The flowchart of FIG. 5 is executed by controller 130. Hereinafter, a description will be made of a case where the sub reception system is second received signal processor 120. Note that first received signal processor 110 may be the sub reception system. In that case, following second received signal processor 120 just needs to be interpreted as first received signal processor 110, and digital broadcast signal Sd2 just needs to be interpreted as digital broadcast signal Sd1.

First, controller 130 controls second received signal processor 120 to demodulate a channel, which is other than that of the main signal, from digital broadcast signal Sd2 received by antenna device 101 (Step S301).

Next, controller 130 functions as same signal identifier 131, analyzes respective pieces of the content information, which are included in main signal Sc1 and sub signal Sc2, and compares individual analysis results of main signal Sc1 and sub signal Sc2 with each other (Step S302).

For example, controller 130 extracts the individual service names as the pieces of the content information, which are included in main signal Sc1 and sub signal Sc2, and compares the extracted service names with each other. A determination method for the same service, which is based on other content information (audio data or image data), will be described later.

Next, controller 130 functions as same signal identifier 131, and based on a comparison result of main signal Sc1 and sub signal Sc2, determines whether or not the service of sub signal Sc2 is the same as (or similar to) the service of main signal Sc1 (Step S303).

For example, it is assumed that the service name extracted from main signal Sc1 is "MHK Osaka", and that the service name extracted from sub signal Sc2 is "MHK Kyoto". In a case where the extracted service names are similar to each other like "MHK Osaka" and "MHK Kyoto", then based on a fact that text data "MHK" in head portions coincide with each other, controller 130 determines that the service of sub signal Sc2 is the same as (or similar to) the service of main signal Sc1 (Yes in Step S303).

In this example, "MHK" in the head portions of the text data represent a key station. Then, based on a fact that the text data, each of which represents the key station (that is, first three characters of each of the text data), coincide with each other, controller 130 determines that the service of sub signal Sc2 is the same as (or similar to) the service of the main signal Sc1 (Yes in Step S303). For example, in controller 130 as same signal identifier 131, the uniformity (or similarity) between the service of main signal Sc1 and the service of sub signal Sc2 may be determined in this way. That is, in such a case where a plurality of characters (for example, three characters) predetermined from the head in each of the text data which represent the service names coincide with those from the head in the other text data, controller 130 as same signal identifier 131 may determine that the service of sub signal Sc2 is the same as (or similar to) the service of the main signal Sc1 (Yes in Step S303). However, such a criterion of the determination is merely an example, and the present disclosure is never limited to this operation example.

In a case of having determined that the service of sub signal Sc2 is not the same as (or similar to) the service of main signal Sc1 (No in Step S303), controller 130 changes the channel being selected in second received signal processor 120 (Step S304). Controller 130 repeats the processing of Step S301 and after in the changed channel.

In a case of having determined that the service of sub signal Sc2 is the same as (or similar to) the service of main signal Sc1 (Yes in Step S303), controller 130 ends the processing of Step S102 of FIG. 3, and proceeds to the processing of Step S103.

Until it is determined by the above-described processing that the service of sub signal Sc2 is the same as (or similar to) the service of main signal Sc1, controller 130 repeatedly changes the channel of sub signal Sc2. In this way, in digital broadcast reception device 100, such a channel that supplies substantially the same service as that of main signal Sc1 is selected (searched) in the sub reception system.

### [1-2-2-3. Regarding determination method for same service]

Hereinafter, a description will be made of a modification example of the determination method for the same service in the sub reception system demodulation processing.

In the sub reception system demodulation processing, the determination of the same service may be performed by using the video signals included in main signal Sc1 and sub signal Sc2. For example, in Step S302 of FIG. 5, controller 130 may extract image data of a logotype and the like of the broadcast station from the individual video signals included in main signal Sc1 and sub signal Sc2, and may compare the extracted image data with each other.

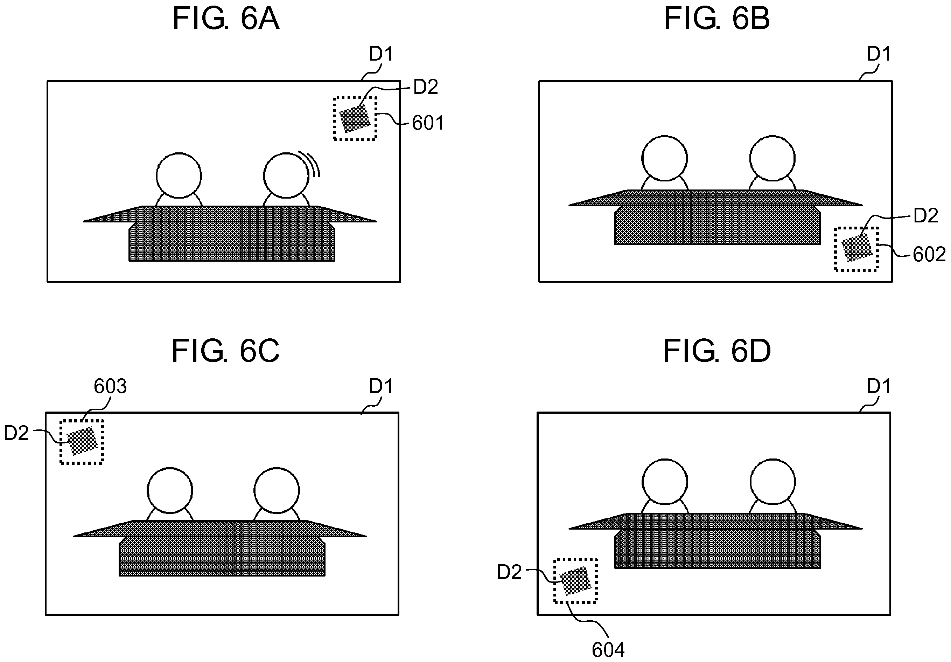

A description will be made of an extraction method for the image data of the logotype with reference to FIG. 6A to FIG. 6D.

FIG. 6A to FIG. 6D are diagrams showing an example of a display video by the video signal output from digital broadcast reception device 100 in the first exemplary embodiment. FIG. 6A to FIG. 6D show a first display example to fourth display example of the video signal by the digital broadcast.

In image data D1 of the whole the screen, logotype D2 is usually fixed to the screen, and does not move on the screen. Accordingly, in this exemplary embodiment, for example, based on information of motion vectors included in main signal Sc1 and sub signal Sc2, controller 130 may take out image data in which a vector quantity becomes substantially zero (an image stills), and may extract the image data of the logotype.

Moreover, as shown in FIG. 6A to FIG. 6D, a display position of logotype D2 is usually disposed on a corner of the screen. Therefore, such an extraction target of logotype D2 does not have to be image data D1 of the whole of the screen. In this exemplary embodiment, as shown in FIG. 6A to FIG. 6D, controller 130 may set, as such extraction targets, predetermined regions 601 to 604 on four corners of image data D1, and may extract logotype D2. Controller 130 may compare shapes, colors, locations and the like of the image data of logotypes D2, which are individually extracted from main signal Sc1 and sub signal Sc2, with each other, and may determine whether or not the services are the same service.

Note that the image data of such comparison targets are not limited to the image data of logotype D2. For example, still images (images in which vector quantities of motion vectors become substantially zero), which are individually included in main signal Sc1 and sub signal Sc2, may be compared with each other.

Moreover, in the sub reception system demodulation processing, the determination as to whether or not the services are the same service may be performed by using the audio signals individually included in main signal Sc1 and sub signal Sc2. For example, controller 130 may hold, in buffer memory 102, individual audio data of a predetermined period (for example, five seconds) in main signal Sc1 and sub signal Sc2, may compare the held audio data with each other, and may determine whether or not portions similar to each other are present between main signal Sc1 and sub signal Sc2.

The above-described determination may be performed, for example, when controller 130 determines that the service names are similar to each other. In this way, controller 130 can omit the comparison of the audio data (or the image data) when the service names are not similar to each other, and the determination as to whether or not the services are the same service can be performed efficiently.

### [1-3. Effects and the like]

As described above, in this exemplary embodiment, a digital broadcast reception device includes: a first received signal processor; a second received signal processor; and a controller. The first received signal processor receives a signal, which indicates a first channel in a digital broadcast, and outputs a first channel signal obtained by demodulating the received signal. The second received signal processor receives a signal, which indicates a second channel different from the first channel, and generates a second channel signal obtained by demodulating the received signal. The controller controls operations of the first received signal processor and the second received signal processor. The controller selects the second channel based on pieces of information regarding services provided by respective channels, the pieces of information being individually included in the first channel signal and the second channel signal, in a period while the first received signal processor is outputting the first channel signal. The controller switches a signal to be outputted from either one signal of the first channel signal and the second channel signal to other one of the first channel signal and the second channel signal based on individual receiving states of the first channel under output and the selected second channel.

Note that digital broadcast reception device 100 is an example of the digital broadcast reception device. First received signal processor 110 is an example of the first received signal processor. Second received signal processor 120 is an example of the second received signal processor. Controller 130 is an example of the controller. Digital broadcast signal Sd1 is an example of the signal that indicates the first channel. Channel signal Sc1 is an example of the first channel signal. Digital broadcast signal Sd2 is an example of the signal that indicates the second channel. Channel signal Sc2 is an example of the second channel signal.

For example, in the example shown in the first exemplary embodiment, digital broadcast reception device 100 includes: first received signal processor 110; second received signal processor 120; and controller 130. First received signal processor 110 receives digital broadcast signal Sd1, which indicates the first channel in the digital broadcast, and outputs the first channel signal (channel signal Sc1) obtained by demodulating received digital broadcast signal Sd1. Second received signal processor 120 receives digital broadcast signal Sd2, which indicates the second channel different from the first channel, and generates the second channel signal (channel signal Sc2) obtained by demodulating received digital broadcast signal Sd2. Controller 130 controls operations of first received signal processor 110 and second received signal processor 120. In a period while first received signal processor 110 is outputting the first channel signal (channel signal Sc1), controller 130 selects the second channel based on the pieces of information regarding the contents of the respective services, which are individually included in the first channel signal (channel signal Sc1) and the second channel (channel signal Sc2). Controller 130 switches a signal to be outputted from channel signal Sc1 to channel signal Sc2 based on the individual receiving states of the first channel under output and the selected second channel.

In this way, in digital broadcast reception device 100, the second channel (channel signal Sc2) is selected based on the information regarding the services provided by the respective channels, which are individually included in the first channel signal (channel signal Sc1) and the second channel signal (channel signal Sc2). In this way, the user who views the service by using digital broadcast reception device 100 mounted on the mobile body can continuously view the same service in response to the receiving state of the digital broadcast while the user is moving.

Based on the pieces of information regarding the services, which are individually included in the first channel signal and the second channel signal, the controller of the digital broadcast reception device may select the second channel so that the service provided by the second channel can have the same content as the content of the service provided by the first channel.

For example, in the example shown in the first exemplary embodiment, in digital broadcast reception device 100, based on the pieces of information regarding the services, which are individually included in the first channel signal (channel signal Sc1) and the second channel signal (channel signal Sc2), controller 130 selects the second channel so that the service provided by the second channel can have the same content as the content of the service provided by the first channel.

In this way, the user who views the service by using digital broadcast reception device 100 mounted on the mobile body can continuously view the same service in response to the receiving states of the first channel signal (channel signal Sc1) and the second channel signal (channel signal Sc2) while the user is moving.

Each of the pieces of information regarding the service concerned may include at least one of (i) the service name, (ii) the event name, and (iii) the audio data and the image data in the service concerned. Moreover, the image data may include image data which indicates a logotype regarding the service.

Note that the content information is an example of the information regarding the service. The logotype (logotype D2) of the broadcast station is an example of the logotype regarding the service concerned.

For example, in the example shown in the first exemplary embodiment, in digital broadcast reception device 100, the content information regarding the service concerned includes at least one of (i) the service name, (ii) the event name, and (iii) the audio data and the image data in the service concerned. Moreover, the image data includes the image data which indicates the logotype regarding the service.

In this way, digital broadcast reception device 100 can select the second channel, which is provided by the sub reception system, based not on the network information but on the content information.

The controller of the digital broadcast reception device may select the second channel by using the broadcast IDs individually included in the first channel signal and the second channel signal.

For example, in the example shown in the first exemplary embodiment, in digital broadcast reception device 100, controller 130 may select the second channel (channel signal Sc2) by using a plurality of broadcast IDs, which are individually included in the first channel signal (channel signal Sc1) and the second channel signal (channel signal Sc2). For example, controller 130 may limit a selection target of the second channel, which is provided by the sub reception system, to a range where the ONID is the same as that of the first channel. Under this condition, controller 130 may compare the TSIDs and the SIDs, which are individually included in channel signal Sc1 and channel signal Sc2, with each other. In this way, in digital broadcast reception device 100, efficiency can be brought to the selection of the second channel, which is performed in controller 130.

Moreover, in the example shown in the first exemplary embodiment, in digital broadcast reception device 100, controller 130 selects the second channel while analyzing the information regarding the service concerned in the period of outputting the first channel signal (channel signal Sc1). Controller 130 compares the individual receiving states of the first channel under output and the selected second channel with each other, and based on a result of this comparison, switches the signal to be outputted from the first channel signal (channel signal Sc1) to the second channel signal (channel signal Sc2).

In this way, in digital broadcast reception device 100, at any time while the first channel signal (channel signal Sc1) is being output, the information regarding the service concerned is analyzed, and the second channel is selected. Therefore, the user who views the service by using digital broadcast reception device 100 can continuously view the service in response to the individual receiving states of channel signal Sc1 and channel signal Sc2 while the user is moving.

In the case of switching the signal to be outputted from the first channel signal to the second channel signal, the controller of the digital broadcast reception device may synchronize the delays of the first channel signal and the second channel signal with each other.

For example, in the example shown in the first exemplary embodiment, in digital broadcast reception device 100, in the case of switching the signal to be outputted from the first channel signal (channel signal Sc1) to the second channel signal (channel signal Sc2), controller 130 synchronizes the delays of the first channel signal (channel signal Sc1) and second channel signal (channel signal Sc2) with each other.

In this way, when the channel being viewed at present by the user is switched from the first channel to the second channel, digital broadcast reception device 100 can reduce the feeling of discomfort, which may be possibly sensed by the user due to a shift of the timing, which occurs by a fact that the first channel signal and the second channel signal are not synchronized with each other.

The controller of the digital broadcast reception device may switch the signal to be outputted from the first channel signal to the second channel signal at the time of the scene change or during the period of the commercial message in the program under broadcast in the first channel signal.

For example, in the example shown in the first exemplary embodiment, in digital broadcast reception device 100, controller 130 switches the signal to be outputted from the first channel signal (channel signal Sc1) to the second channel signal (channel signal Sc2) at the time of the scene change or during the period of the commercial message in the program under broadcast.

In this way, when the channel being viewed at present by the user is switched from the first channel to the second channel, even in the case where the first channel signal and the second channel signal are not synchronized with each other, digital broadcast reception device 100 can switch the service in response to the scene or content of the service, and accordingly, the feeling of discomfort, which may be possibly sensed by the user, can be reduced.

### SECOND EXEMPLARY EMBODIMENT

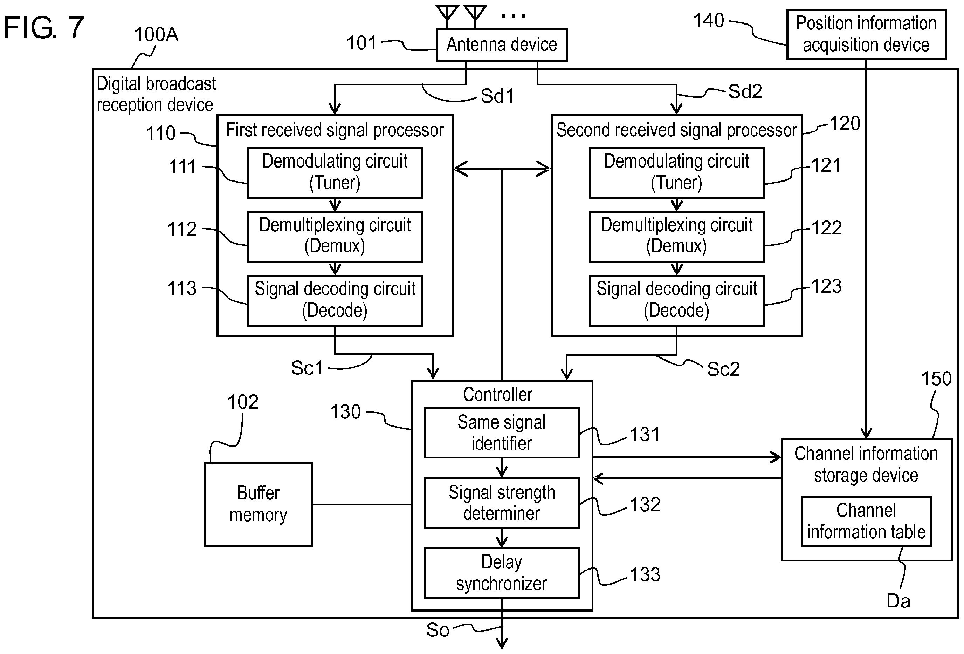

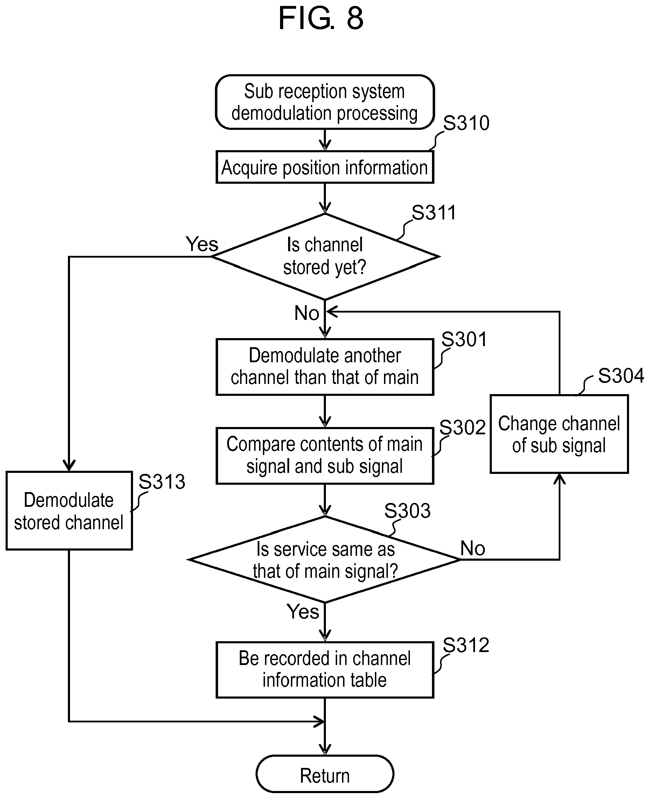

Hereinafter, a second exemplary embodiment will be described with reference to FIG. 7 and FIG. 8.

In the first exemplary embodiment, the description has been made of the operation example where the channel of the same service as that of the main reception system is searched in the sub reception system. In this exemplary embodiment, a description will be made of a method for accumulating search results for the channel of the same service by using position information.

### [2-1. Configuration]

Hereinafter, next, a description will be made of digital broadcast reception device 100A in the second exemplary embodiment.

Note that, in digital broadcast reception device 100A shown in the second exemplary embodiment, the same reference numerals are assigned to constituents which perform substantially the same operations as those of the constituents provided in digital broadcast reception device 100 shown in the first exemplary embodiment, and a description of these constituents of digital broadcast reception device 100A is omitted. Hereinafter, different points from those of digital broadcast reception device 100 shown in the first exemplary embodiment will be mainly described, and in some cases, a description of substantially the same operations as those of digital broadcast reception device 100 shown in the first exemplary embodiment is omitted.

FIG. 7 is a block diagram schematically showing a configuration example of digital broadcast reception device 100A in the second exemplary embodiment.

As shown in FIG. 7, digital broadcast reception device 100A has substantially the same configuration as that of digital broadcast reception device 100 described in the first exemplary embodiment. In addition to this configuration, digital broadcast reception device 100A further includes: position information acquisition device 140; and channel information storage device 150.

Position information acquisition device 140 is composed, for example, of a GPS (Global Positioning System) module. Position information acquisition device 140 receives a radio wave (GPS information) from a GPS satellite, and determines position information that indicates a latitude and longitude of a location where the radio wave is received. Position information acquisition device 140 is an example of a position information acquisition controller that acquires a position of digital broadcast reception device 100A (subject device).

Channel information storage device 150 is composed, for example, of a storage medium such as a flash memory. Channel information storage device 150 stores channel information table Da. Channel information table Da is a data table for associating (at least) two channels, which are determined to be the same service in same signal identifier 131, and position information, which indicates a position where this determination is made, with each other, and managing the associated two channels and position information. Channel information storage device 150 is an example of a storage that stores search results of the channel of the same service.

### [2-2. Operations]

Hereinafter, operations of digital broadcast reception device 100A in this exemplary embodiment will be described with reference to FIG. 8.

FIG. 8 is a flowchart showing an example of sub reception system demodulation processing executed in digital broadcast reception device 100A in the second exemplary embodiment.

Digital broadcast reception device 100A in this exemplary embodiment acquires a current position of digital broadcast reception device 100A, which is mounted on the mobile body, at any time by position information acquisition device 140, and performs the sub reception system demodulation processing while referring to and updating channel information table Da. Specifically, controller 130 of digital broadcast reception device 100A executes the flowchart shown in FIG. 3, and in Step S102 shown in FIG. 3, performs the sub reception system demodulation processing shown in FIG. 8.

In the flowchart of FIG. 8, controller 130 first acquires position information, which indicates the current position of digital broadcast reception device 100A, from position information acquisition device 140 (Step S310).

Next, controller 130 refers to channel information table Da, and determines whether or not the channel, which is being viewed at present in main signal Sc1, is stored in channel information table Da in association with position information within a predetermined range (for example, a radius of 1 km) from the position information acquired in Step S310 (Step S311).

In a case of having determined in Step S311 that the channel being viewed in main signal Sc1 is not stored in channel information table Da (No in Step S311), controller 130 executes the respective pieces of the processing of Step S301 to Step S304 in a similar way to the first exemplary embodiment.

In a case of having made a determination of Yes as a result of executing the processing of Step S303, controller 130 associates the respective channels of main signal Sc1 and sub signal Sc2, which are determined in Step S303 to be the same service, and the position information (position information acquired in Step S310) of the current position, with each other, and stores the associated channels and position information in channel information table Da (Step S312).

In a case of having determined in Step S311 that the channel being viewed in main signal Sc1 is stored in channel information table Da (Yes in Step S311), controller 130 demodulates another channel, which is associated with the channel of main signal Sc1 in channel information table Da, by the sub reception system (Step S313).

In this way, controller 130 ends the sub reception system demodulation processing (Step S102) of FIG. 3, and advances the processing to Step S103.

In digital broadcast reception device 100A, when two channels, which are different from each other and provide substantially the same service, are determined between the main reception system and the sub reception system by a fact that the processing described above is executed (Yes in Step S303), then a correspondence relationship (search result) between these channels is accumulated in channel information table Da in association with the position information (position information acquired in step S310) of the current position (Step S312).

Thereafter, in a case where the mobile body on which digital broadcast reception device 100A is mounted passes through a same position as (or a position close to) the position concerned (that is, the position accumulated in channel information table Da), if the user who uses digital broadcast reception device 100A views the same service as the service concerned (that is, the service provided by the channel accumulated in channel information table Da), then, without performing the processing of Step S301 to Step S304 one more time, controller 130 of digital broadcast reception device 100A can demodulate another channel, which provides the same service as the service being viewed by the user at present, by the sub reception system (Step S313). Therefore, in digital broadcast reception device 100A, a processing time can be reduced, and a load related to the sub reception system demodulation processing can be reduced.

### [2-3. Effects and the like]

As described above, in this exemplary embodiment, the digital broadcast reception device further includes: a position information acquisition controller; and a storage. The position information acquisition controller acquires position information that indicates a position of the digital broadcast reception device concerned. The storage stores the position information when the second channel is selected and the first channel and the second channel in association with each other. The controller selects the second channel based on the position information acquired by the position information acquisition controller and based on the information stored in the storage.

Note that digital broadcast reception device 100A is an example of the digital broadcast reception device. Position information acquisition device 140 is an example of the position information acquisition controller. Channel information storage device 150 is an example of the storage.

For example, in the example shown in the second exemplary embodiment, digital broadcast reception device 100A further includes: position information acquisition device 140; and channel information storage device 150 in addition to the configuration of digital broadcast reception device 100 shown in FIG. 1. Position information acquisition device 140 acquires the position information that indicates the position of digital broadcast reception device 100A. Channel information storage device 150 stores the position information when the second channel is selected and the first channel and the second channel in association with each other. Controller 130 selects the second channel based on the position information acquired by position information acquisition device 140 and based on the information stored in channel information storage device 150.

In this way, in digital broadcast reception device 100A, every time when the second channel is selected by the analysis for the information regarding the service mentioned above, the position information and the first channel and the second channel are stored in channel information storage device 150 in association with each other. After such storing is performed, controller 130 can select the second channel based on the information stored in channel information storage device 150. Therefore, efficiency when the second channel is selected can be enhanced.

### OTHER EXEMPLARY EMBODIMENT

As described above, the description is made of the first and second exemplary embodiments as illustration of the technology disclosed in the present application. However, the technology in the present disclosure is not limited to this, and is applicable also to exemplary embodiments, which are subjected to alteration, replacement, addition, omission, and the like. Moreover, it is also possible to constitute new exemplary embodiments by combining the respective constituent elements, which are described in the foregoing first and second exemplary embodiments, with one another.

Accordingly, hereinafter, other exemplary embodiment will be illustrated.

In the first and second exemplary embodiments described above, the description is made of the configuration example where digital broadcast reception device 100 (100A) is mounted on the mobile body such as a vehicle. However, the present disclosure is never limited to this configuration. Digital broadcast reception device 100 (100A) may be mounted, for example, on a mobile terminal. In this case, in a case where a holder of the mobile terminal moves by walk, bicycle or the like, or uses a vehicle, a train, a vessel, an aircraft or the like, the switching of output signal So (the switching from main signal Sc1 to sub signal Sc2) may be performed. Moreover, the mobile body on which digital broadcast reception device 100 (100A) is mounted is not limited to the vehicle, and for example, may be a train, a vessel, an aircraft or the like.

Moreover, in the first and second exemplary embodiments described above, the description is made of the operation example where, when the switching of output signal So (the switching from main signal Sc1 to sub signal Sc2) is performed in digital broadcast reception device 100 (100A), the main reception system and the sub reception system are interchanged with each other between first received signal processor 110 and second received signal processor 120. However, the present disclosure is never limited to this configuration. In digital broadcast reception device 100 (100A), in first received signal processor 110 and second received signal processor 120, the main reception system and the sub reception system may be fixed, respectively.

Moreover, in the first and second exemplary embodiments described above, the description is made of the configuration example where digital broadcast reception device 100 (100A) includes two reception system, which are first received signal processor 110 and second received signal processor 120. However, the present disclosure is never limited to this configuration. Digital broadcast reception device 100 (100A) may include three or more reception systems. In this case, one reception system among the plurality of reception systems may be set as the main reception system, and the rest thereof may be set as the sub reception systems. Moreover, controller 130 may search a plurality of the channels of the same service as that of the main reception system by using a plurality of the sub reception systems.

Moreover, the digital broadcast to be received by digital broadcast reception device 100 (100A) may be a terrestrial digital broadcast, or may be a BS (Broadcasting Satellite) broadcast or a CS (Communications Satellite) broadcast. Moreover, the standard of the digital broadcast may be ISDB (ISDB-T, ISDB-TB, ISDB-TS) or DVB, or may be ATSC (Advanced Television Systems Committee).

As described above, the description is made of the first and second exemplary embodiments as illustration of the technology in the present disclosure. For this purpose, the accompanying drawings and the detailed description are provided.

Hence, the constituent elements described in the accompanying drawings and the detailed description can include not only constituent elements, which are essential for solving the problems, but also constituent elements, which are mentioned for illustrating the above-described technology and are not essential for solving the problems. Therefore, it should not be immediately recognized that such inessential constituent elements are essential by the fact that the inessential constituent elements are described in the accompanying drawings and the detailed description.

Moreover, the above-mentioned first and second exemplary embodiments illustrate the technology in the present disclosure, and accordingly, can be subjected to various types of alterations, substitutions, additions, omissions and the like within the scope of claims or equivalents thereof.

### INDUSTRIAL APPLICABILITY

The present disclosure is applicable to a receiver of a digital broadcast. Specifically, the present disclosure is applicable to a receiver such as an in-vehicle receiver, which is mounted on a mobile body (for example, a vehicle, a train, a vessel, an aircraft or the like), a receiver mounted on a mobile terminal, or the like.

### REFERENCE MARKS IN THE DRAWINGS

- 100, 100A: digital broadcast reception device
- 101: antenna device
- 102: buffer memory
- 110: first received signal processor
- 111, 121: demodulating circuit
- 112, 122: demultiplexing circuit
- 113, 123: signal decoding circuit
- 120: second received signal processor
- 130: controller
- 131: same signal identifier
- 132: signal strength determiner
- 133: delay synchronizer
- 140: position information acquisition device
- 150: channel information storage device

## Claims

1. A digital broadcast reception device comprising:
a first received signal processor configured to receive a signal that indicates a first channel in a digital broadcast, and to output a first channel signal obtained by demodulating the received signal;
a second received signal processor configured to receive a signal that indicates a second channel different from the first channel, and to generate a second channel signal obtained by demodulating the received signal; and
a controller configured to control operations of the first received signal processor and the second received signal processor,
wherein, in a period while the first received signal processor is outputting the first channel signal, the controller selects the second channel based on pieces of information regarding services provided by respective channels, the pieces of information being individually included in the first channel signal and the second channel signal, and switches a signal to be outputted from either one signal of the first channel signal and the second channel signal to other one of the first channel signal and the second channel signal based on individual receiving states of the first channel under output and the selected second channel.

2. The digital broadcast reception device according to claim 1,
wherein, based on the pieces of information regarding the services, the controller selects the second channel so that a service provided by the second channel has a same content as a content of a service provided by the first channel.

3. The digital broadcast reception device according to claim 1,
wherein, based on the pieces of information regarding the services, the controller selects the second channel so that a service provided by the second channel has a same content as a content of a service provided by the first channel, and
each of the pieces of information regarding the services includes at least one of (i) a service name, (ii) an event name, and (iii) audio data and image data in the service.

4. The digital broadcast reception device according to claim 1,
wherein, based on the pieces of information regarding the services, the controller selects the second channel so that a service provided by the second channel has a same content as a content of a service provided by the first channel,
each of the pieces of information regarding the services includes at least one of (i) a service name, (ii) an event name, and (iii) audio data and image data in the service, and
the image data includes image data that indicates a logotype regarding the service.

5. The digital broadcast reception device according to claim 1,
wherein, based on the pieces of information regarding the services, the controller selects the second channel so that a service provided by the second channel has a same content as a content of a service provided by the first channel, and
selects the second channel by using broadcast IDs individually included in the first channel signal and the second channel signal.

6. The digital broadcast reception device according to claim 1,
wherein, in a case of switching a signal to be outputted from the first channel signal to the second channel signal, the controller synchronizes delays of the first channel signal and the second channel signal with each other.

7. The digital broadcast reception device according to claim 1,
wherein the controller switches a signal to be outputted from the first channel signal to the second channel signal at a time of a scene change or during a period of a commercial message in program under broadcast in the first channel signal.

8. The digital broadcast reception device according to claim 1, further comprising:
a position information acquisition controller configured to acquire position information that indicates a position of the digital broadcast reception device; and
a storage configured to store the position information when the second channel is selected and the first channel and the second channel in association with each other,
wherein the controller selects the second channel based on the position information acquired by the position information acquisition controller and based on information stored in the storage.
